(19)

Europäisches
Patentamt
European
Patent Office
Office européen
des brevets

(11)　**EP 4 288 265 B1**

(12)　　　　　**EUROPEAN PATENT SPECIFICATION**

(45) Date of publication and mention
of the grant of the patent:
**15.07.2026　Bulletin 2026/29**

(21) Application number: **22706091.0**

(22) Date of filing: **04.02.2022**

(51) International Patent Classification (IPC):
*B29C 45/14* (2006.01)　　*D06F 58/04* (2006.01)
*F16F 15/12* (2006.01)　　*D06F 58/00* (2020.01)
*B29C 45/16* (2006.01)　　*F16F 15/16* (2006.01)

(52) Cooperative Patent Classification (CPC):
**B29C 45/14786; B29C 67/246; D06F 58/04;**
B29C 2045/14459; B29L 2031/26

(86) International application number:
**PCT/GB2022/050302**

(87) International publication number:
**WO 2022/167812 (11.08.2022 Gazette 2022/32)**

(54) **A TUBLE DRYER SEAL WITH A FELT LAYER**

WÄSCHETROCKNERDICHTUNG MIT FILZLAGE

JOINT D'ÉTANCHÉITÉ AVED UN COUCHE DE FEUTRE POUR UN SÉCHOIR À LINGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2021　GB 202101575**

(43) Date of publication of application:
**13.12.2023　Bulletin 2023/50**

(73) Proprietor: **BMP Europe Ltd.,
Accrington Lancashire BB5 5YH (GB)**

(72) Inventors:
• **CONNELL, Leanne
Accrington Lancashire BB5 5YH (GB)**

• **OLIVER, David
Preston Lancashire PR3 0PP (GB)**

(74) Representative: **Mullholland, Lewis Paul
WP Thompson
1 Mann Island
Liverpool L3 1BP (GB)**

(56) References cited:
EP-A2- 0 416 653　　　CN-A- 103 882 661
CN-Y- 201 198 539　　GB-A- 2 355 743
US-A- 5 509 670　　　US-A1- 2008 157 037
US-A1- 2008 157 037　　US-A1- 2018 245 727

**Description**

The present invention relates to seals, methods for manufacturing seals, and their use. More particularly, the invention relates to annular seals, and to their use in machines, such as tumble dryers, to prevent moisture loss from the machine. Even more particularly, the present invention relates to tumble dryer seals and methods for producing tumble dryer seals.

Typically, articles are dried in machines such as tumble dryers. The machines typically comprise a housing unit and a rotating tumbler, such as a drum, located therein. Damp articles, such as clothes are placed in the tumbler. The tumbler is supported within the housing of the machine, and it is spun during use. Air is supplied to the tumbler during use, which is typically heated, to assist the drying process. The air passes through the articles as the tumbler spins. The moisture from the articles is collected as steam. The steam is generally passed through an exhaust duct or vent where it is either vented, e.g. through a hose, or is condensed and collected in a reservoir.

The formation of steam in the machine means that water vapour can escape into the machine and the surrounding atmosphere. If water vapour escapes, it can have detrimental effects, such as reducing the efficiency of the machine, damaging the surrounding environment, or damaging the components of the machine. It is, therefore, desirable to reduce the egress of water vapour from the tumbler.

The efficiency of machines, such as tumble dryers, has been determined to date based on a number of different factors, such as the energy consumption of the standard cotton programme at full and partial load, power consumption in *"off mode"*, power consumption in *"left-on mode"*, and presence or absence of a power management system. To date, preventing the egress of water vapour from the tumbler, and the release of humid air from the machine, has not been a high priority. Accordingly, there is a desire to improve the efficiency of seals that are used in machines that reduce the egress of water vapour from the machine without increasing energy consumption.

The use of seals in machines, such tumble dryers is commonplace. The space between the tumbler and the machine is generally wide enough to allow articles to pass through it. Accordingly, the use of seals can serve many purposes, but they have primarily been used in existing machines to close the gap between the tumbler and the machine. An advantage associated with closing the gap between the tumbler and the machine is that articles are prevented from damaging the machine by moving from the tumbler into the machine, and articles are prevented from damage by scraping between the tumbler and the machine.

The use of seals can also assist in keeping heat inside the tumbler, which reduces the amount of energy needed to maintain predetermined temperature in the dryer, and reduce fiction between parts of the machine, such as the tumbler and the walls of the machine. Reductions in friction may also result in a reduction of the energy consumption of the machine.

Existing seals that are used in machines, such as tumble dryers, suffer from numerous problems. These problems include challenges associated with the need to retain humid air and moisture in the tumbler. There is therefore a need for an improved seal. The existing seals are commonly made of flexible polymeric materials, such as flexible polyurethane foam, and they may have a textile layer adhered to one side of the seal. Typically, flexible polyurethane foam is produced in large blocks which are then cut into thin sheets. A layer of textile material may be applied to one surface of the polyurethane sheet, which is then cut into long, thin strips. The ends of the strips are curved to form a loop and the two ends stitched together to form an annular seal.

The method of manufacturing existing seals results in them having cut faces, some of which need to be joined, *i.e.* faces which have been cut after the foam has been formed. The cut faces exhibit an open-cell structure typical of flexible polyurethane foam. The cut faces present a weak point in existing seals and they allow moisture to escape from the tumbler since there is no physical barrier preventing the passage of moisture through the foam. For example, moisture may escape from the joins of the cut faces, e.g. if the join is imperfect or the joining method involves stitching that could cause perforations through which moisture could escape. Further, the cut faces allow the moisture access to the open-cell structure of the polyurethane foam and be absorbed by and/or pass through the foam.

The stitched portion and/or the strip ends may provide a point of weakness in the seal that is susceptible to failure. For example, during use, the adhesion of the textile layer may weaken and/or the ends of the join may weaken. These failures may be gradual over time reducing the efficiency of the machine, or they may be catastrophic resulting in complete failure of the seal and damage to the machine and or articles in the tumbler. The end result is that the lifetime of the machine may be significantly reduced by the failure of the seal.

The adherence of the textile layer to a seal can result in it becoming puckered upon bending to form an annular seal. The puckering can enable gaps to form between the seal and the tumbler that can more easily permit egress of steam and/or moisture from the machine.

In use, the seals may be fitted in a groove or recess in the housing. Existing seals may become dislodged during use and/or spin with the tumbler, requiring additional components such as adhesive layers to maintain the seal in place. Such adhesives may also fail over time. When a seal becomes dislodged and/or moves during use, the effectiveness of the seal may be reduced.

US 2008/157037 discloses a dryer seal structure which incorporates a polyurethane foam interior. The foam incorporates a flame-retardant additive of intumescent character to provide enhanced resistance to flammability.

CN 103882661 discloses a clothes dryer drum seal and a clothes dryer. The clothes dryer drum seal comprises a circular seal felt arranged between a circular rubber pad and the rear end of a drum, wherein the seal matches the circular shape and contacts the rear end of the drum. The circular seal felt is connected with the circular rubber pad, which is fixed to the inner wall of a drum support plate of a clothes dryer rear shell. The clothes dryer drum seal further comprises an elastic buffer part disposed between the inner wall of the drum support plate of the clothes dryer rear shell and the circular rubber pad, and is connected with the inner wall of the drum support plate of the clothes dryer rear shell.

CN 201198539 discloses a thermal air stream sealing device of a condensation-type clothes dryer. Annular pressing rings are respectively arranged at the circumference of an thermal air inlet of a casing of the clothes dryer along with the inner side wall of the casing; the pressing ring is respectively connected with a rubber ring; the rubber ring is provided with an annular groove; a felt is embedded inside the annular groove; the felt surrounds and is attached to the outer wall of a roller of the clothes dryer; a thermal air cavity is arranged between the pressing rings.

GB 2355743 discloses a rotary cone rock bit including a bit body, a journal, a cutter cone rotatably mounted on the journal and an annular seal forming a lubricant seal between the cone and journal. The seal has a static seal surface and a dynamic seal surface which includes two outwardly projecting surface elements separated by a recessed portion, one of the surface elements including a wear surface formed of composite material. The seal surface elements may be formed of the same or different material as the seal body or another surface element.

US 5509670 discloses a packing member having an annular body with circular inner and outer walls, with first and second end walls extending therebetween, and including a relatively soft upper portion formed from an elastomeric polymeric material having a Shore A hardness of between about 65 and 80 and a fabric reinforced, harder lower portion formed from elastomeric polymeric material having a greater Shore A hardness. A groove extends axially into said annular body through the first end wall and defines a plane perpendicular to an annular axis. The upper portion of the annular body includes sealing lips formed adjacent to at least a portion of the groove, the outer sealing lip extending vertically beyond the inner sealing lip and the inner sealing lip having an inner sealing edge. The inner sealing lip is inclined inwardly to form the sealing edge for sealing engagement when in slidable contact with a separate moveable part. The upper portion of the packing member may be formed from a rubber having a Shore A hardness of between about 60 and 85 and the harder lower portion may be made from a fabric reinforced rubber having a Shore A hardness of between about 70 and 90, but greater than the Shore A hardness of the softer upper portion.

The present invention seeks to provide a solution to one or more of the identified problems by providing an improved seal, a method for manufacturing seals, and their use. The seals may be annular seals, and they may be used in machines, such as tumble dryers, to reduce moisture loss from the machine, to increase the efficiency of the machine, such as energy and/or condensation efficiencies, to increase the lifespan of the machine, and/or to reduce stress on components of the machine. More particularly, the seals my be tumble dryer seals.

According to a first aspect of the invention, a method for producing an annular seal is provided according to claim 1. The method comprises injecting a polymeric composition comprising polyurethane and the constituent monomers and co-block polymers thereof into an annular mould, curing the polymeric composition, and demoulding the seal to provide a one-piece, continuous annular seal comprising the polymeric composition bonded to the felt textile layer. The polymeric material is provided with a skin formed on its external surfaces.

According to a second aspect of the invention, a moulded tumble dryer seal is provided according to claim 9. The moulded tumble dryer seal comprises a one-piece, continuous annular seal comprising a polyurethane composition integrally formed with and bonded to a felt textile layer. The polyurethane composition comprises a skin formed on its external faces.

The seal of the present invention is particularly suitable for use in drying machines, such as tumble dryers. The seal may prevent the egress of moisture from the machine. The seal may act to seal the gap between the tumbler and the machine.

The seal is an annular seal. The seal may be substantially annular in shape or it may be completely annular in shape.

Any suitable mould may be used. The mould may be annular, such as substantially annular or completely annular in shape. The mould may be formed from any suitable material.

Suitable materials include metals and alloys. For example, the mould may be formed of aluminium, such as an aluminium C250 tooling plate. The mould may be of any suitable configuration. Suitable configurations include closed moulds. The use of closed moulds may be advantageous to allow a desired density of the polymeric composition in the seal to be achieved.

The polymeric composition may form a foam that expands in the mould during curing. In one arrangement, any suitable polymeric composition may be used as the polymeric composition of the present invention. Suitable polymeric compositions may comprise a mixture comprising a polyol and an isocyanate to enable the formation of a polyurethane, or a polyurethane formed from a polyol and an isocyanate.

In one arrangement, polyol and isocyanate may be present in any suitable ratio. The ratio may be suitable to allow a polyurethane form with a suitable density to be formed. In a further arrangement, the polyol and isocyanate may be present in a ratio of from about 100:50 to about 100:70, about 100:55 to about 100:65, or about 100:55 to about 100:60. In another arrangement, the polyurethane may be formed from a polyol and an isocyanate in a ratio of from about 100:50 to about 100:70, about 100:55 to about 100:65, or about 100:55 to about 100:60.

In one arrangement, the components of the polymeric composition may be premixed before injection into the mould. For example, the components of the polymeric composition may be premixed immediately before injection into the mould.

In one arrangement, the foam that is formed following curing may have any suitable density. The density may be from about 100 kg/m$^3$ to about 250 kg/m$^3$, from about 120 kg/m$^3$ to about 230 kg/m$^3$, from about 140 kg/m$^3$ to about 210 kg/m$^3$, from about 150 kg/m$^3$ to about 200 kg/m$^3$, from about 160 kg/m$^3$ to about 190 kg/m$^3$, or from about 170 kg/m$^3$ to about 180 kg/m$^3$. In another arrangement, the foam may have a density of about 100 kg/m$^3$, about 120 kg/m$^3$, about 140 kg/m$^3$, about 150 kg/m$^3$, about 170 kg/m$^3$, about 180 kg/m$^3$, about 190 kg/m$^3$, about 200 kg/m$^3$, about 210 kg/m$^3$, about 230 kg/m$^3$, or about 250 kg/m$^3$. It is particularly advantageous if the density of the foam imparts sufficient flexibility to the feel to ensure a good contact is maintained between the tumbler and machine during use, while also imparting sufficient strength to avoid degradation.

In one arrangement, a portion of the textile layer may be adhered to a surface of the polymeric composition. Any portion of the textile layer may be adhered to a surface of the polymeric composition. For example, the textile layer may be completely adhered or partially adhered to a surface of the polymeric composition. Any suitable method of adhering the textile layer to the surface of the polymeric composition may be used. Suitable methods include adhering the textile layer to the polymeric composition during manufacture. The polymeric composition may expand in the mould and during curing adhere to the textile layer, such that no further adhesive means are required. For example, the textile layer may be positioned in the annular mould prior to injecting the polymeric composition, the polymeric composition may be injected into the annular mould, and the seal may be demoulded wherein the polymeric composition is adhered to the textile layer. In an alternative arrangement, the textile layer may be adhered to the polymeric composition using an adhesive means. Any suitable adhesive means may be used. Suitable adhesive means include glue, tape, or double-sided tape for example.

A surface of the textile layer may be in contact with any surface of the annular mould during at least a portion of the moulding process. The textile layer may prevent the polymeric composition from contacting a surface of the mould during moulding. Any suitable surface of the textile layer may be in contact with any surface of the annular mould. In one arrangement, a surface of the textile layer may be in contact with an interior, bottom, top, exterior surface and/or the peripheral circumference of the mould.

The textile layer may be formed from any suitable material. In one arrangement, the textile layer may comprise polyester, felt, and/or a polyester felt. In another arrangement, the at least a portion of a surface of the textile material is singed. For example, the singed surface may

The textile layer may be formed from any suitable material. In one arrangement, the textile layer may comprise polyester, felt, and/or a polyester felt. In another arrangement, the at least a portion of a surface of the textile material is singed. For example, the singed surface may be positioned towards the polymeric composition in the mould. The textile material is bonded to the polymeric composition. The singed surface may provide for improved bond adhesion with the polymeric material.

In one arrangement, the polymeric composition may be injected into the mould comprising a textile layer. Advantageously, the polymeric composition may saturate at least a portion of the surface of the textile layer, *i.e.* the polymeric composition at least partially surrounds the fibres of the textile layer prior to curing. After curing, the infiltrated polymer may be intimately adhered to the fibres of the textile layer.

In one arrangement, the textile layer may be any suitable thickness. Suitable thicknesses include between about 1 mm and about 5 mm, between about 2 mm and about 4 mm, or between about 3 mm and about 4 mm. In another arrangement, the textile layer may be about 1 mm, about 2 mm, about 2.1 mm, about 2.2 mm, about 2.3 mm, about 2.4 mm, about 2.5 mm, about 2.6 mm, about 2.7 mm, about 2.8 mm, about 2.9 mm, about 3 mm, about 4 mm, or about 5 mm thick.

The textile layer may be of any suitable density. Suitable densities include from about 500-800 g/m$^2$, about 550-750 g/m$^2$, about 600-700 g/m$^2$, or about 650-700 g/m$^2$. In another arrangement, the density of the textile layer may be about 600 g/m$^2$, about 610 g/m$^2$, about 620 g/m$^2$, about 630 g/m$^2$, about 640 g/m$^2$, about 650 g/m$^2$, about 660 g/m$^2$, about 670 g/m$^2$, about 680 g/m$^2$, about 690 g/m$^2$, or about 700 g/m$^2$.

In one arrangement, the method may be carried out at any suitable temperature. Suitable temperatures include a range from about 15°C to about 30°C, about 20°C to about 30°C, about 25°C to about 30°C. In another arrangement, the method may be carried out at about 15°C, about 20°C, about 25°C, or about 30°C. The temperature may be selected to avoid the need for excessive heating while still enabling a desirable curing time.

In one arrangement, the curing time may be any suitable time prior to demoulding. Suitable times include from about 5-15 minutes, about 6-13 minutes, about 7-11 minutes, about 8-10 minutes, or about 9-10 minutes. In another arrangement, the curing time may be about 5 minutes, about 6 minutes, about 7 minutes, about 8 minutes, about 9 minutes, about 10 minutes, about 11 minutes, about 13 minutes, or about 15 minutes.

The method disclosed herein may be used to form an annular seal. The seal may be continuous. The seal may be a one-piece seal. The seal may be substantially annular or completely annular. The seal may comprise a skin on its surface. The skin may act as a barrier for moisture to enter the open-cell portion of the polymeric composition. The barrier may assist in preventing the egress of moisture from the machine. In one arrangement, the skin may cover all of the surfaces of the annular seal. In another arrangement, the skin may partially cover the surfaces of the annular seal. For example, where the seal comprises a textile material, a skin may not form on the surface in contact with the textile material. Alternatively, the skin may form on all of the surfaces of the polymeric composition, and it may optionally assist in bonding the textile material to the polymeric composition. The skin may be smooth and prevent degradation of the polymeric material during use.

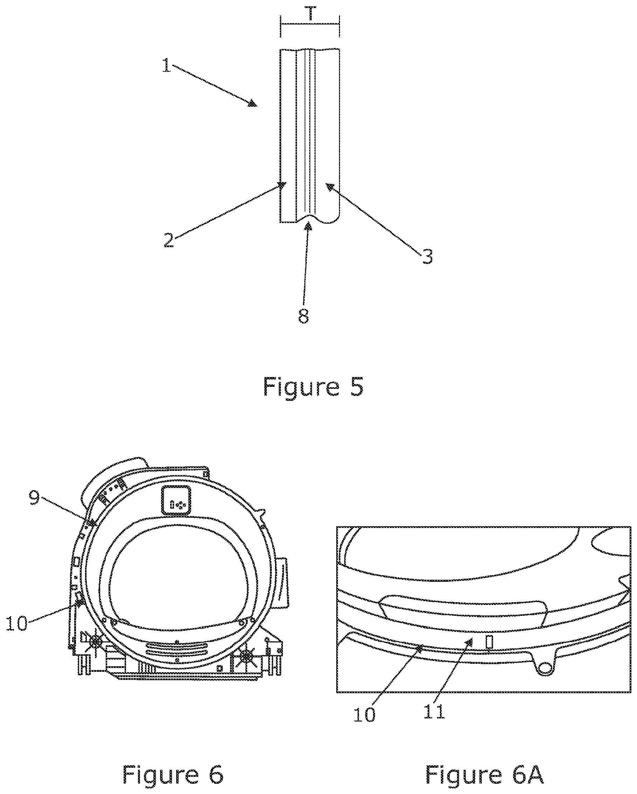

The seal may have any suitable thickness (T), *i.e.* the cylindrical length of the annual seal, as shown in Figure 5. The thickness of the seal may be determined by its use. For example, the seal may be suitable for use in tumble dryers to provide an effective moisture seal. Suitable thicknesses may be from about 7mm to about 24mm, about 7.5mm to about 23.5mm, about 8mm to about 23mm, about 8.5mm to about 22.5 mm, about 10mm to about 20mm, about 12mm to about 18 mm, about 14mm to about 16mm. Such suitable ranges may include thicknesses from about 8.7mm to about 16.7mm, 10.7mm to about 14.7mm or about 11.7mm to about 13.7mm. In another arrangement the seal thickness may be about 7mm, about 7.5mm, about 8mm, about 8.5mm, about 10mm, about 12mm, about 14mm. about 16mm, about 18mm, about 20mm, about 22mm, about 22.5mm, about 23mm, about 23.5mm, or about 24mm. For example, such thicknesses may be about 8.7mm, about 10.7mm, about 11.7mm, about 13.7mm, about 14.7mm or about 16.7mm..

The seal may have any suitable outer diameter. The outer diameter of the seal may be determined by its use. For example, the seal may be suitable for use in tumble dryers to provide an effective moisture seal. Suitable outer diameters, D, may be from about 450mm to about 550mm, about 460mm to about 540mm, about 469mm to about 536mm, about 450mm to about 530mm, about 460mm to about 520mm, about 470mm to about 510mm, about 480mm to about 500mm, about 479mm to about 526mm, about 489mm to about 516mm, about 499mm to about 506mm, about 496mm to about 509mm, about 486mm to about 519mm, about 476 mm to about 529mm, about 513mm to about 518mm, or about 516 mm to about 517mm. In another arrangement the outer diameter may be about 450mm, about 460mm, about 469mm, about, about 470mm, about 476 mm, about 479mm, about 480mm, about 486mm, about 489mm, about 490mm, about 496mm, about 500mm, about 506mm, about 509mm, about 510mm, about 513mm, about 516mm, about 517mm, about 518mm, about 519mm, about 520mm, about 526mm, about 529mm, about 530mm, about 536mm, about 540mm, or about 550mm. Such seals may have a corresponding outer circumference of from about 1300mm to about 1850mm, about 1350mm to about 1800mm, about 1400 to about 1750mm, about 1450mm to about 1700mm, about 1500mm to about 1650mm, about 1550mm to about 1600mm, about 1414mm to about 1728mm, about 1473mm to about 1684mm, about 1473mm to about 1683mm, about 1611mm to about 1628mm or about 1620mm to about 1624mm. For example, the seal may have an outer circumference of about 1300mm, about 1350mm, about 1400, about 1414mm, about 1450mm, about 1473mm, about 1500mm, about 1600mm, about 1611mm, about 1620mm, about 1624mm, about 1628mm, about 1650mm, about 1683mm, about 1684mm, about 1700mm, about 1728mm, about 1750mm, about 1800mm, or about 1850mm. A textile material may be present on the surface of the polymeric composition. The textile material may be as described above. The textile material may form a continuous or partial surface on the polymeric composition.

The seal may improve the efficiency of the machine, such as a tumble drier. The efficiencies may involve preventing moisture loss from the machine. For example, at least 90%, at least 92% or at least 94% of the moisture may be retained in the machine. The moisture loss may be determined by any suitable method. Suitable methods include those that are set out by industry standards, such as BS EN 61121 - 2021.

A tumble dryer may comprise the seal of the present invention.

Preferred embodiments of the invention will now be described in greater detail, by way of example only, with reference to the accompanying figures, in which:

Figures 1A-1C     depict a conventional annular seal (1A), having open-cell faces (1B) and a stitched join (1C)

Figure 2     depicts perspective, front and rear views of an annular seal according to the present invention, and produced according to a method of the present invention

Figure 3A-B     depicts a mould (3A) and corresponding lid or top portion (3B) as used in a method of the present invention

Figure 4     depicts a closed mould as used in a method of the present invention

Figure 5     depicts a side profile of a part of an annular seal according to the present invention

Figure 6          depicts a part of a tumble dryer housing, including a groove where a seal according to the present invention may be mounted

Figure 6A         depicts a close up of a portion of the groove of Figure 6 comprising a conventional seal mounted therein

Figure 7          depicts an annular seal according to the present invention identifying aspects of its geometry

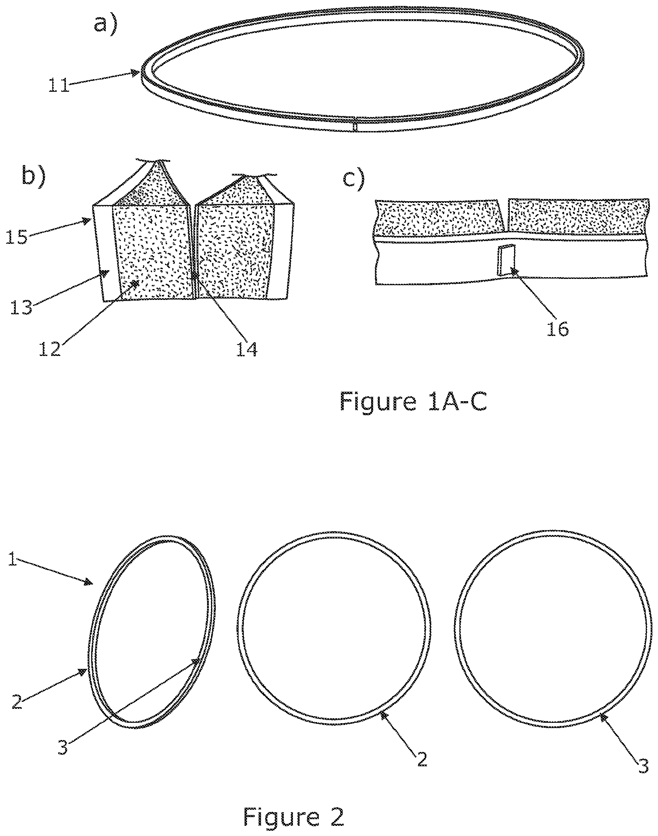

Referring first to Figure 2, there is shown an annular seal 1 according to an embodiment of the invention.

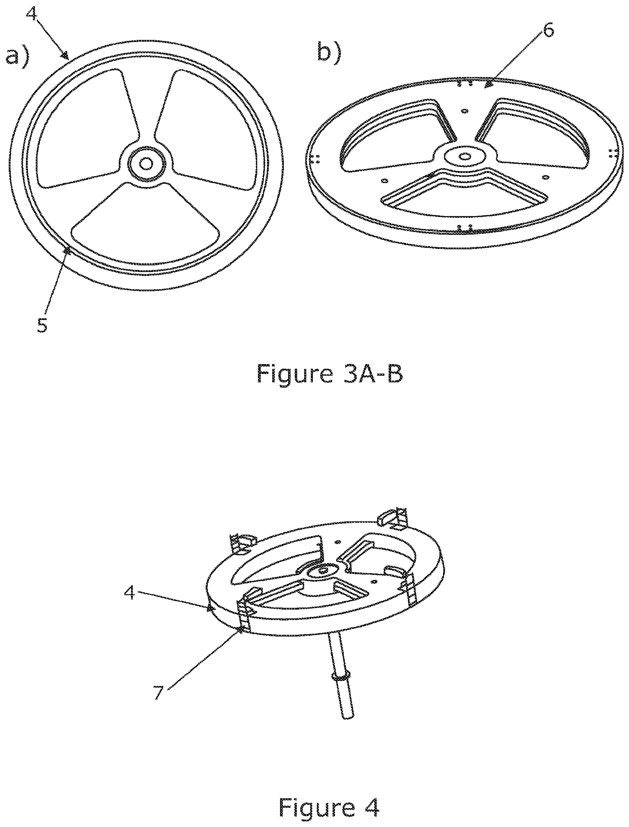

The seal 1 may be formed by any process and comprise any polymeric composition to provide a continuous annular seal. Alternatively, such a seal may be made by a method according to the invention, wherein to produce the annular seal, a polymeric composition comprising polyurethane and/or the constituent monomers and/or co-block polymers thereof, is injected into an annular void 5 in the mould 4, as shown in Figure 3. Optionally, a top portion 6 of the mould 4 may then be fitted and clamped in place using clamps 7, as shown in Figure 4. Alternative sealing or clamping means can also be used as appropriate. The mould may optionally then be rotated during a curing period to provide a uniform annular seal. Once cured, the seal is demoulded to provide an annular seal. Alternative closed or unclosed moulds may also be used.

Optionally, the method may involve filling a plurality of moulds with the polymeric material and sealing, spinning, curing and demoulding the seals iteratively to provide a mechanism for producing a succession of seals over an extended period of time. Thus, it may be possible to produce the seals by a time-efficient method.

By utilising a closed mould system, a controlled atmosphere may be provided for curing, and loss of the polymeric material during the injecting and curing process may be avoided.

In addition, where an expandable polymeric composition is used, closed mould 4 may ensure that the expansion of the polymeric foam is controlled to maintain a desired shape and size of the resultant seal. The closed mould may also enable a particularly desired foam density to be consistently achieved by limiting the space available for foam expansion. In particular, the closed mould may restrict the expansion of the foam and create a suitable internal pressure within the mould cavity. Thus, a closed mould may enable a higher density to be achieved than the conventional free rise density for the foaming composition used, wherein the free rise density is determined by allowing a set quantity of material to expand unrestricted therefore achieving the lightest possible structure.

While any suitable foam density may be provided or achieved, preferably, the resultant foam, such as a polyurethane foam, may have a density from about $100 \text{ kg/m}^3$ to about $250 \text{ kg/m}^3$ or greater. For example, the densities may be from about $140 \text{ kg/m}^3$ to about $200 \text{ kg/m}^3$ or from about $160 \text{ kg/m}^3$ to about $180 \text{ kg/m}^3$. A suitable density may be about $170 \text{ kg/m}^3$. Such densities may provide an annular seal which has sufficient rigidity to allow for handling the seal to demould it and to mount it in a tumble dryer, while also having sufficient flexibility to ensure that a good fit may be achieved.

While any suitable polymeric material may be used, polyurethane based materials may be particularly preferred. The polymeric material may therefore comprise a mixture comprising a polyol and an isocyanate. These species may be mixed prior to being injected into the mould or the mixing may occur during their introduction to the mould or within it. The polymeric material may have a coefficient of friction that means that it remains stationary during use, and that it does not rotate with the tumbler. This is particularly advantageous because it is not necessary to use other adhesive means, such as tape or glue, to secure the seal in place.

For example, the two components may be dispensed from separate storage tanks into a small mixing or holding chamber and fed from there into the mould. Since the reaction will start as soon as the two species come into contact preferably the species should spend less than about a minute, such as about 30 seconds or less in the mixing chamber before entering the mould. Once in the mould, the mould may be spun to endure good mixing of the species occurs. Alternatively, the species may be mixed in the mixing chamber and then loaded into the mould prior to polymerisation being completed.

A polyol shall be understood to be an organic compound comprising multiple, i.e. two or more, hydroxyl groups. Any suitable polyol may be used. Polyols may be monomeric or polymeric. The polyols may potentially include additional functional groups, other than just hydroxyl groups. Alternatively, the polyols may not include any functional groups other than hydroxyl groups. Suitable polyols include but are not limited to polyether polyols, polyester polyols polycarbonate polyols, polycaprolactone polyols, polybutadiene polyols, polysulfide polyols, and grafted polyols. Polyether polyols may be less susceptible to hydrolysis than some ester-based polyols and thus may be preferred.

In some embodiments, the polyol may be selected from the group including but not limited to poly(tetramethylene ether)glycol, dipropylene glycol, glycerine, sorbitol and Specflex polyols. For example, the polyol may be Specflex NF386.

An isocyanate shall be understood to be an organic compound comprise a functional group having the formula R-N=C=O, wherein the R group may be an organic based group. Any suitable isocyanate may be used. This includes the use of poly-isocyanates and monoisocyanates, aliphatic isocyanates and aromatic isocyanates. Suitable isocyanates include but are not limited to methylene diphenyl diisocyanate, toluene diisocyanate, diphenylmethane diisocyanate, hexamethylene diisocyanate, isophorone diisocyanate and Specflex isocyanates. For example, the isocyanate may be methylene diphenyl diisocyanate or Specflex NE135.

Where the polymeric composition comprises a polyol and an isocyanate or comprises a polyurethane formed from a polyol and an isocyanate, the ratio of polyol to isocyanate used may be from about 100:50 to about 100:70. Such a ratio may enable a polyurethane foam having a suitable foam density to be achieved.

While the mould 4 provides a circular annular void 5 to provide a circular annular seal, other geometries are also envisioned. This includes non-uniform and/or almost circular rings, ovals and angular seals such as polygons having 8 or more sides.

As shown in Figure 5, the profile of the polymeric material may optionally be moulded to aid in retaining the seal in a desired position when mounted in a tumble dryer. This may include the provision of one or more protrusions, lips, rims, grooves, indentations 8 or the like.

Moulds may be provided in a variety of sizes and/or geometries, and may optionally be tailored to produce sales of specific geometries for particular machines. Since the method provides for annular seals to be produced having any desired shape and size, there may be no need to cut any portion of the polymeric material of the annular seals. As a result, the interior of the polymeric material may not become exposed during the production and/or installation of the annular seal for use in a tumble dryer.

In use, the seal may be fitted to a part of a tumble dryer housing 9, as shown in Figure 6 to prevent moist fluids such as water and/or steam from exiting the drum at undesired locations. The seal may be maintained in an appropriate position by the provision of a groove or channel 10 in the housing, as shown in Figure 6A, which depicts a conventional seal 11 located in groove 10. Seals of the present invention may be correspondingly mounted into such housing grooves. To prevent undesired movement of the seal, such as the dislodgment of the seal from the housing, the channel may provide only a minimal tolerance for geometry variance. The provision of a method in which a mould is used may therefore ensure that each seal produced has a desired thickness, width and diameter.

In addition, where the polymeric material contacts an interior surface of the mould, a smooth skin may be formed as shown in Figure 5.

As shown in Figures 1A-C, annular seals 11 known in the art are formed of a foam-based polymeric material, such as polyurethane foam. The foam is conventionally formed in large blocks which are then cut into long foam strips 12. A textile layer, such as a felt layer 13 is adhered to the strips of foam and, optionally, a layer of adhesive tape 14 is applied to the opposing face. Lengths of the composite strips 15 are then cut according to a desired diameter and bent to form a ring. The felt is then stitched to join the ends of the strips together to form an annular seal comprising a join 16. Once formed into a ring and stitched, the annular seal is then twisted by 90 degrees such that the foam and textile layers form flat rings having the same diameter, akin to the orientation shown in Figure 2 depicting an alternative seal of the present invention. Once twisted, the seal is conventionally mounted in a groove or channel 10 in the housing, as depicted in Figure 6. To retain the seal in the correct position in this groove 10, and to prevent spinning of the seal during tumbler rotation, an adhesive may be used.

Unlike the moulded seal of the present invention as depicted in Figure 2, the exterior foam surfaces of the conventional annular seal are not smooth. Instead, as shown in Figure 1B, the open-cell network of the foam structure forms the exterior surface of the seal, and provides a pathway for moisture to traverse the seal.

The provision of a skin may therefore provide a barrier over the interior open-cell network of the polyurethane. This may enable the seal to provide a more effective moisture barrier by blocking access to the open-cell structure of the polyurethane which may otherwise a network through which moisture may travel to traverse the seal.

In addition, the annular seal may provide a smooth exterior surface to the seal. This may aid in preventing fragmentation of the polymeric material during use.

As shown in Figure 2, unlike the conventional seals of Figures 1A-1C, the method of the present invention may yield a continuous annular seal 1, such that there is no need to perform a separate step of stitching, gluing or the like to adhere parts of the seal together to form a loop. This may avoid producing a region of weakness 16 in the vicinity of the glue and/or stitching and avoids the need to perforate a portion of the seal during its formation which may provide a flow path for moisture to traverse the seal. In addition, the seal may be formed in the desired orientation avoid the need to twist the seal after the textile layer has been adhered and stitched.

According to some embodiments, the method of the present invention may be used to produce an annular seal 1 having a polymeric material layer 2 and textile material 3.

As shown in Figure 2, the textile material 3 may take the form of a layer having the same shape and diameter as the polymeric material. Alternatively, it may be envisaged that the textile layer has a different geometry to the polymeric material. For example, the textile layer could have a reduced width compared to the polymeric material and thereby cover over a portion of the polymeric material. Alternatively, the textile material may extend beyond the width of the polymeric material.

Seals of the present invention, including seals formed by a method of the present invention, may therefore comprise two flat faces, one of which is formed of a polymeric material and the other of which is provided by a textile layer.

In use, the seal 1 may be mounted in a groove or channel 10 in the housing of a tumble dryer, as shown in Figure 6. Preferably, the textile layer 3 may be configured to be positioned against the drum of the tumble dryer, while the polymeric material may be configured to be positioned against the housing.

Optionally, the seal of the present invention may be maintained in position absent the provision of an adhesive. Specifically, it has been found that the increased surface contact area of the polyurethane skin compared to the open cell polyurethane foam of conventional seals yields a substantially increased surface friction. As a result, the seal may be mounted on a housing component adjacent a tumbler component and maintained in a desirable position without being rotated by the actions of a spinning tumbler in the absence of an adhesive layer affixing the seal to the housing or tumbler.

In various embodiments, the textile layer 3 is adhered to a surface of the polymeric composition 2. This may be achieved by the use of a glue, tape or the like which may be applied to an entire interface between the textile layer and the polymeric material, or to a portion thereof.

In the embodiments shown in Figure 2, no additional adhesive layer is used. Instead, the textile layer is positioned in the mould prior to the polyurethane composition being injected into the annular mould. The polymeric composition may then be injected into the mould 4, such that it contacts at least a portion of the textile layer. The polymeric composition may then cure while in contact with the textile layer such that, when demoulded, the seal provides an annular seal comprising a polymeric composition adhered to the textile layer. Preferably, where the polymeric material contacts the textile material, the polymeric material saturates at least a portion of the textile. Thus, the annular seal may be integrally formed with the textile layer.

This may avoid the need for the provision of any extraneous glue or adhesive to adhere the textile layer to the polymeric material. As a result, the bond between the polymeric and textile materials may be stronger. In addition, since the textile may be suitably cut, shaped and positioned prior to integrally forming and curing the polymeric foam, there may be no need to subsequently bend the textile material to form a loop. Thus, the textile layer may not suffer from wrinkles and/or puckering. This may reduce levels of excess wear during use. In addition, the provision of an unwrinkled textile surface may enable a good contact to be maintained between the textile layer and any adjacent components of the tumble dryer during use, such as the drum. This may reduce the amount of undesired moisture loss from the drum during use.

Where a textile material is added to the mould prior to injecting the polymeric material, a surface of the textile layer may contact a surface of the annular mould during at least a portion of the moulding process. This contact may prevent the polymeric material from completely engulfing the textile layer and provide an annular seal after curing wherein the textile layer is present on an external face of the seal as shown in Figure 2.

While any suitable textile material may be used. In some embodiments the textile layer comprises polyester. Alternatively or in addition, the textile layer may comprise a felt. For example, the textile layer may comprise a polyester felt. Polyester felt may be resistant to crumbling and/or disintegration in moist environments.

In addition, the matted structure of the felt may be particularly suitable for being singed. Singed felt forms a more rigid surface which may enable more robust bonding between the polymeric material and the textile.

According to some embodiments the textile layer, or felt, may be singed on at least a portion of at least one surface. For example, the textile layer or felt may be singed across the entirety of one surface. Preferably this surface may be the textile or felt surface which is configured to contact the polymeric material when an annular seal is formed according to a method of the invention.

In addition to providing an improved surface for bonding to the polymeric material, the singed surface may reduce or limit the depth to which the polymeric material may infiltrate the textile layer to ensure that the exterior portion of the textile, i.e. the portion contacting the interior surface of the mould during production, remains free or largely-free from the polymeric material. Accordingly, in some embodiments a portion or the entirety of a surface of the textile layer positioned away from an interior wall of the annular mould may be singed prior to placing the textile material 3 in the mould 4, while optionally, a portion or the entirety of the surface of the textile layer positioned towards an interior wall of the annular mould may be unsinged.

Thus, according to a method of the invention, a singed textile layer, such as a felt layer, may be positioned in an annular mould with the unsinged portion adjacent to a mould surface and an singed portion adjacent a portion of the mould void. A polymeric composition may then be injected into the mould void wherein it contacts the singed surface and saturates one or crevasses and/or voids present in the singed surface to at least partially infiltrate the fibres and/or surface of the textile. After curing, the infiltrated polymer may be intimately adhered to the fibres of the textile layer. This may prevent the textile layer from becoming separated from the polymeric material during use and may also aid in ensuring that the textile layer remains flat and free of wrinkles and/or puckering. However, as shown in Figure 2, the polymeric material does not saturate the full thickness of the textile layer.

As shown in Figure 5, the textile layer 3 may be thinner that the polymeric material 2. For example, the polymeric material may account for around 50-95% of the thickness, T, of the seal, around 55-90%, around 60-85% around 65-90%, around 70-90%, or around 75-90%, more specifically about 74-90 % of the total thickness. For example, the textile may be about 2.2mm thick while the seal may have a total thickness falling within one of the ranges or values disclosed above. This may provide an appropriate level of seal rigidity while maintaining the ability of the seal to conform with drum surface to maintain a good seal. However, alternative ratios may also be envisaged.

The rigidity and density of the textile layer should be suitable to enable the textile material to conform to the neighbouring tumble dryer services, such as the drum surface, to form a tight seal.

The textile layer may be of any suitable thickness to ensure a good contact between the drum and the seal. For example, the textile layer, which may optionally be a felt layer, may be between about 1 mm and about 5 mm thick. For instance, the textile layer may be between about 1.5 and about 3 mm thick. Optionally the textile layer may be about 2.2 mm thick. In addition or alternatively, the textile layer may have a density of about 500-800 g/m$^2$. For example, the textile layer, such as a felt layer may have a density of about 640-680 g/m$^2$. One particularly suitable density for the textile layer, such as a felt layer, may be about 660 g/m$^2$.

The method may be carried out at any suitable temperature. Suitable temperatures are likely to be dependent on the polymeric material used. However, in general, temperatures from about 15°C to about 30°C, such as temperatures of about 25°C to about 30°C, or about 25°C may be suitable. These temperatures may be particularly suitable for polyurethane-based polymeric compositions. Such temperatures may be desirable since they may avoid the need for excessive heating.

In some embodiments, once the polymeric material has been injected into the mould, the seal may be left to cure for a period of about 5 to about 15 minutes prior to demoulding the seal, such as for a period from about 6 to about 10 minutes. Alternatively, the seal may be left for a longer period before demoulding. A curing time of about 6 minutes or about 6 to about 10 minutes may provide a high throughput method for manufacturing the annular seals while ensuring that the seals are not demoulded at a stage where curing is incomplete to the extent that the skin is of insufficient strength and/or thickness to maintain the integrity of the annual seal once demoulded, where the seals may be undesirably deformed.

Methods of the present invention may be used to provide seals of any suitable geometry. As such, methods of the invention may be used to forms seal which are correctly sized for specific models of tumble dryer. Since the geometry of the annular seal may be dictated by the geometry of the mould used, the method may provide for the manufacture of annular seals having an accurate and consistent geometry. Such seals may be particularly suitable for achieving a high moisture barrier efficiency by accurately fitting a mounting point on a tumble dryer, such as a mounting grove as shown in Figures 6 and 6A.

In addition, the provision of a seal comprising uncut polyurethane foam having an exposed skin, may enable the seal to be mounted between a housing and tumbler element in the absence of an adhesive layer affixing the seal to the housing or tumbler, and to be maintained in position or stationary during a drying cycle by friction.

As such, seals of the present invention may be produced and/or otherwise provided having a thickness, T, from about 8.5mm to about 22.5mm, as depicted in Figure 5. Such thicknesses may be suitable for use in conventional tumble dryers to provide an effective moisture seal.

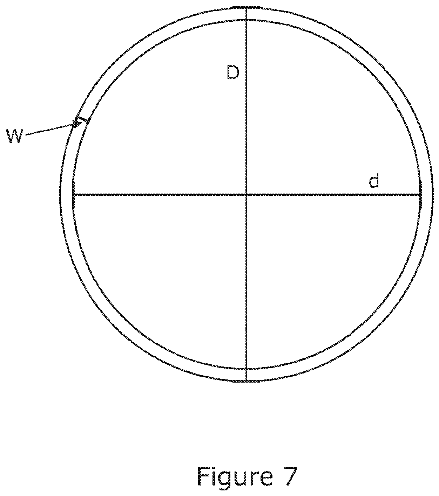

As shown in Figure 7, where a seal is provided and/or a disclosed method is used to provide annular seals having a circular or approximately circular geometry, the annular seals may have an outer diameter, D, from about 469mm to about 536mm, wherein this diameter is the external diameter of the annulus. Additionally or alternatively, the annular seals may have an inner diameter, d, from about may be from about 450mm to about 550mm, about 460mm to about 540mm, about 469mm to about 536mm, about 450mm to about 530mm, about 460mm to about 520mm, about 470mm to about 510mm, about 480mm to about 500mm, about 479mm to about 526mm, about 489mm to about 516mm, about 499mm to about 506mm, about 496mm to about 509mm, about 486mm to about 519mm, about 476 mm to about 529mm, about 513mm to about 518mm, or about 516 mm to about 517mm. In another arrangement the inner diameter may be about 450mm, about 460mm, about 469mm, about, about 470mm, about 476 mm, about 479mm, about 480mm, about 486mm, about 489mm, about 490mm, about 496mm, about 500mm, about 506mm, about 509mm, about 510mm, about 513mm, about 516mm, about 517mm, about 518mm, about 519mm, about 520mm, about 526mm, about 529mm, about 530mm, about 536mm, about 540mm, or about 550mm. Such seals may have a corresponding outer circumference of from about 1300mm to about 1850mm, about 1350mm to about 1800mm, about 1400 to about 1750mm, about 1450mm to about 1700mm, about 1500mm to about 1650mm, about 1550mm to about 1600mm, about 1414mm to about 1728mm, about 1473mm to about 1684mm, about 1473mm to about 1683mm, about 1611mm to about 1628mm or about 1620mm to about 1624mm. For example, the seal may have an outer circumference of about 1300mm, about 1350mm, about 1400, about 1414mm, about 1450mm, about 1473mm, about 1500mm, about 1600mm, about 1611mm, about 1620mm, about 1624mm, about 1628mm, about 1650mm, about 1683mm, about 1684mm, about 1700mm, about 1728mm, about 1750mm, about 1800mm, or about 1850mm. This may provide seals having widths, W, of about 13mm to about 21mm, or about 15mm to about 16mm. For example, the seal may have a width of about 13mm, about 15mm, about 16mm or about 21 mm, such as about 12.7mm, 14.7mm, 15.7mm or about 20.5mm. Such geometries may be suitable for use in conventional tumble dryers to provide an effective moisture seal.

Seals according to the present invention may be at least 5%, 10%, 20%, 50% or more than 50% more efficient in preventing a moisture loss than comparable seals in which the polymeric material has exposed open-cell surfaces. Seals according to the present invention may additionally and/or alternatively have a reduced energy consumption and/or cycle time.

In particular, seals according to the present invention and/or produced according to a method of the present invention may be capable of providing seals having an efficiency rating of at least 90%, at least 92% or at least 94% for preventing moisture loss based on industry standards. For example, according to BS EN 61121-2021 or equivalents, such as BS EN 61121-2013.

While the method of producing annular seals according to the present invention, and seals according to the present invention have been described as suitable to prevent undesired moisture loss from tumble dryers during use, it is also envisaged that such seals may be used in alternative systems or devices where there is a need to produce a moisture proof seal.

It will be appreciated that any of the optional features of any of the embodiments described herein could also be provided with one or more of any of the other embodiments described herein.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

The use of the term "about" in relation to a numerical value shall be understood as encompassing any value which would round to the stated numerical value when rounded to the last significant figure.

In view of the foregoing description it will be evident to a person skilled in the art that various modifications may be made within the scope of the invention. For example, although an embodiment has been described with reference to a particular polymeric material and/or textile, alternative species may be used.

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

Definitions

The term polyol will be understood to be an organic compound comprising multiple, i.e. two or more, hydroxyl groups, while an isocyanate shall be understood to be an organic compound comprise a functional group having the formula R-N=C=O, wherein the R group may be an organic based group.

The diameter of the seal refers to the external diameter of the annulus.

The thickness of the seal refers to the thickest portion of the seal cross-section.

Examples

Two exemplary seals were tested under the same conditions on a tumble dryer having an 8kg load which was either fully loaded or loaded as A or B half loads according to the standard testing procedures set out in BS EN 61121-2013, which is incorporated herein in its entirety. The first seal comprised a standard known seal formed of cut flexible polyethylene foam having an open cell structure, with an adhered textile layer, the second seal comprised a seal according to the present invention comprising moulded polyethylene foam having a skin formed on the external faces. A corresponding textile layer was similarly adhered after production of the initial moulded seal was produced in order to provide a direct comparison of cut or open face polyethylene foam-based seals and moulded polyethylene seals comprising a skin.

Both seals were mounted in a consistent manner on a tumble dryer. The drums were then spun according to repeated standard drying cycles for full and half loads. The testing program included 2 Type A loads at 4kg, 2 Type B loads at 4kg and 3 full loads which equate to A+B, totalling 8kg and providing 7 drying cycles in total. Average final moisture contents, condensation efficiencies and power usages were then calculated according to the standards set out in BS EN 61121, and are summarised in Table 1.

Table 1

| Program | Load | Edry (kWh) | Edry1/2 (kWh) | Tdry (min) | Tdry1/2 (min) | Final moisture of laundries % | Cond. Eff. | Motor Power (W) | Motor Power 1/2 (W) |
|---|---|---|---|---|---|---|---|---|---|
| 11,7 standard cut flexible polyurethane foam seal | 8 KG %60 | 1,527 | 838 | 188 | 110 | 1.69 | 83% | 157.6 | 153.3 |
| 11,7 moulded polyethylene foam seal | 8 KG %60 | 1,488 | 833 | 177 | 105 | 0.97 | 92% | 162.2 | 161.8 |

Wherein:

Load is the whole load according to the standards set out in BS EN 61121 for a cotton dry program;

Edry is the average energy consumption for treatment full in kWh;

Edry1/2 is the average energy consumption for treatment half in kWh;

Tdry is the average programme time for treatment full in min;

Tdry1/2 is the average programme time for treatment half in min;

Cond. Eff. is the average condensation efficiency, wherein:

The average condensation efficiency C is calculated from the condensation efficiencies of all valid test runs expressed as a percentage:

$$C = \frac{1}{n}\sum_{j=1}^{n} C_j$$

Where

$n$ is the number of test runs;

$j$ is the test run number;

$C_j$ is the condensation efficiency of test run $j$.

Where

$$C_j = \frac{W_{wj}}{W_i - W_f} \times 100$$

Where:

$W_{wj}$ is the mass of water collected in the condenser reservoir during test run $j$.

$W_i$ is the mass of the test load after wetting but before drying;

$W_f$ is the mass of the test load after drying.

From the above it is shown that, when used in comparable circumstances, the provision of a moulded seal comprising a skin over its exposed faces was found to have a 5% higher condensation efficiency than a corresponding seal formed in the conventional manner formed of cut flexible polyurethane foam having an exposed open cell network. In addition, seals of the present invention were found to have lower energy consumptions and yield dryer loads.

**Claims**

1.  A method for producing a tumble dryer seal, wherein the method comprises:

    positioning a felt textile layer (3) in an annular mould;
    injecting a polymeric composition comprising polyurethane and the constituent monomers and co-block polymers thereof into the annular mould,
    curing the polymeric composition, and
    demoulding the seal to provide a one-piece, continuous annular seal (1) comprising the polymeric composition bonded to the felt textile layer, wherein the polymeric material is provided with a skin formed on its external faces.

2.  The method of claim 1, wherein the annular mould is a closed mould (4).

3.  The method of any preceding claim, wherein the polymeric composition comprises a mixture comprising a polyol and an isocyanate, optionally wherein ratio of polyol to isocyanate is from about 100:50 to about 100:70, or wherein the polyurethane is formed from a polyol and an isocyanate in a ratio from about 100:50 to about 100:70.

4.  The method of any preceding claim, wherein the felt comprises a polyester felt.

5.  The method of any preceding claim, wherein:

    i) a surface of the felt textile layer is singed, preferably optionally wherein the singed surface is positioned away from an interior wall of the annular mould; and/or
    ii) a portion of the polymeric composition saturates at least a portion of the felt textile layer.

6.  The method of any preceding claim, wherein the felt textile layer:

    i) is between about 1 mm and about 5 mm thick, optionally wherein the felt textile layer is between about 1.5 and about 3 mm thick, and further optionally wherein the textile layer is about 2.2 mm thick; and /or
    ii) has a density of 500-800 g/m$^2$, preferably wherein the felt has a density of about 640-680 g/m$^2$ and particularly preferably wherein the felt has a density of about 660 g/m$^2$.

7.  The method of any preceding claim, wherein the method is carried out at a temperature from about 15°C to about 30°C, preferably at a temperature of about 25°C to about 30°C.

8.  The method of any preceding claim wherein the seal is demoulded about 5 to about 15 minutes after injection moulding, preferably about 6 to about 10 minutes after injection moulding.

9.  A moulded tumble dryer seal (1), obtained by the method of claim 1, wherein the seal comprises a one-piece, continuous annular seal comprising a polyurethane composition integrally formed with and bonded to a felt textile layer (3), wherein the polyurethane composition comprises a skin formed on its external faces, and optionally wherein the skin covers all surfaces other than the surface of the polyurethane composition which is bonded to the felt textile layer.

10. The moulded tumble dryer seal of claim 9, wherein the felt textile layer forms a continuous structure.

11. The moulded tumble dryer seal of any one of claims 9 and 10, wherein the textile layer is between about 1 mm and about 5 mm thick, preferably wherein the textile layer is between about 1.5 and about 3 mm thick and particularly preferably wherein the textile layer is about 2.2 mm thick, optionally wherein the felt comprises a polyester felt.

12. The moulded tumble dryer seal of any one of claims 9-11, wherein the felt textile layer:

i) has an interior surface adjacent to at least a portion of the polyurethane composition, optionally wherein at least a portion of the interior surface is singed, and further optionally wherein a substantial portion of the interior surface is singed; and/or
ii) has a density of about 500 to about 800 g/m$^2$, preferably wherein the felt has a density of about 640 to about 680 g/m$^2$ and particularly preferably wherein the felt has a density of about 660 g/m$^2$

13. The moulded tumble dryer seal of any one of claims 9-12, wherein:

i) the seal has a thickness from about 8.5mm to about 22.5mm, preferably wherein the thickness is about 8.7mm to about 16.7mm, 10.7mm to about 14.7mm or about 11.7mm to about 13.7mm; and/or
ii) the annular seal has a diameter, D, from about 468mm to about 536mm, preferably wherein the diameter is about 513mm to about 518mm or about 516 mm to about 517mm.

14. The moulded tumble dryer seal of any one of claims 9-13, wherein the seal has an efficiency rating of at least 90% for preventing moisture loss, optionally wherein the moisture loss is measured by industry standards, such as BS EN 61121 - 2021.

15. A tumble dryer comprising a moulded tumble dryer seal according to any one of claims 9-14.


**Patentansprüche**

1. Verfahren zur Herstellung einer Wäschetrocknerdichtung, wobei das Verfahren Folgendes umfasst:

Positionieren eine Filztextilschicht (3) in einer Ringform;
Einspritzen einer Polymerzusammensetzung, die Polyurethan und die einzelnen Monomere und Block-Copolymere davon umfasst, in die Ringform;
Aushärten der Polymerzusammensetzung; und
Entformen der Dichtung, um eine einstückige, kontinuierliche Ringdichtung (1) bereitzustellen, die die Polymerzusammensetzung umfasst, die an die Filztextilschicht gebunden ist, wobei das Polymermaterial mit einer Haut bereitgestellt wird, die auf dessen äußeren Seiten ausgebildet ist.

2. Verfahren nach Anspruch 1, wobei die Ringform eine geschlossene Form (4) ist.

3. Verfahren nach einem vorstehenden Anspruch, wobei die Polymerzusammensetzung eine Mischung umfasst, die ein Polyol und ein Isocyanat umfasst, optional wobei ein Verhältnis von Polyol zu Isocyanat von etwa 100 : 50 bis etwa 100 : 70 beträgt oder wobei das Polyurethan aus einem Polyol und einem Isocyanat in einem Verhältnis von etwa 100 : 50 bis etwa 100 : 70 gebildet wird.

4. Verfahren nach einem vorstehenden Anspruch, wobei der Filz einen Polyesterfilz umfasst.

5. Verfahren nach einem vorstehenden Anspruch, wobei:

i) eine Oberfläche der Filztextilschicht versengt wird, bevorzugt optional wobei die versengte Oberfläche weg von einer inneren Wand der Ringform positioniert wird; und/oder
ii) ein Teil der Polymerzusammensetzung zumindest einen Teil der Filztextilschicht sättigt.

6. Verfahren nach einem vorstehenden Anspruch, wobei die Filztextilschicht:

i) zwischen etwa 1 mm und etwa 5 mm dick ist, optional wobei die Filztextilschicht zwischen etwa 1,5 mm und etwa 3 mm dick ist und weiter optional wobei die Textilschicht etwa 2,2 mm dick ist; und/oder
ii) eine Dichte von 500-800 g/m$^2$ aufweist, bevorzugt wobei der Filz eine Dichte von etwa 640-680 g/m$^2$ aufweist und insbesondere bevorzugt wobei der Filz eine Dichte von etwa 660 g/m$^2$ aufweist.

**7.** Verfahren nach einem vorstehenden Anspruch, wobei das Verfahren bei einer Temperatur von etwa 15 °C bis etwa 30 °C, bevorzugt bei einer Temperatur von etwa 25 °C bis etwa 30 °C durchgeführt wird.

**8.** Verfahren nach einem vorstehenden Anspruch, wobei die Dichtung etwa 5 bis etwa 15 Minuten nach dem Spritzgießen, bevorzugt etwa 6 bis etwa 10 Minuten nach dem Spritzgießen entformt wird.

**9.** Geformte Wäschetrocknerdichtung (1), die durch das Verfahren nach Anspruch 1 erhalten wird, wobei die Dichtung eine einstückige, kontinuierliche Ringdichtung umfasst, die eine Polyurethanzusammensetzung umfasst, die integral mit einer Filztextilschicht (3) ausgebildet und an diese gebunden ist, wobei die Polyurethanzusammensetzung eine Haut umfasst, die auf deren äußeren Seiten ausgebildet ist, und optional wobei die Haut alle Oberflächen bedeckt, außer die Oberfläche der Polyurethanzusammensetzung, die an die Filztextilschicht gebunden ist.

**10.** Geformte Wäschetrocknerdichtung nach Anspruch 9, wobei die Filztextilschicht eine kontinuierliche Struktur bildet.

**11.** Geformte Wäschetrocknerdichtung nach einem der Ansprüche 9 und 10, wobei die Textilschicht zwischen etwa 1 mm und etwa 5 mm dick ist, bevorzugt wobei die Textilschicht zwischen etwa 1,5 mm und etwa 3 mm dick ist und insbesondere bevorzugt wobei die Textilschicht etwa 2,2 mm dick ist, optional wobei der Filz einen Polyesterfilz umfasst.

**12.** Geformte Wäschetrocknerdichtung nach einem der Ansprüche 9-11, wobei die Filztextilschicht:

i) eine innere Oberfläche benachbart zu mindestens einem Teil der Polyurethanzusammensetzung aufweist, optional wobei zumindest ein Teil der inneren Oberfläche versengt ist und weiter optional wobei ein wesentlicher Teil der inneren Oberfläche versengt ist; und/oder
ii) eine Dichte von etwa 500 bis etwa 800 g/m$^2$ aufweist, bevorzugt wobei der Filz eine Dichte von etwa 640 bis etwa 680 g/m$^2$ aufweist und insbesondere bevorzugt wobei der Filz eine Dichte von etwa 660 g/m$^2$ aufweist.

**13.** Geformte Wäschetrocknerdichtung nach einem der Ansprüche 9-12, wobei:

i) die Dichtung eine Dicke von etwa 8,5 mm bis etwa 22,5 mm aufweist, bevorzugt wobei die Dicke etwa 8,7 mm bis etwa 16,7 mm, 10,7 mm bis etwa 14,7 mm oder etwa 11,7 mm bis etwa 13,7 mm beträgt; und/oder
ii) die Ringdichtung einen Durchmesser, D, von etwa 468 mm bis etwa 536 mm aufweist, bevorzugt wobei der Durchmesser etwa 513 mm bis etwa 518 mm oder etwa 516 mm bis etwa 517 mm beträgt.

**14.** Geformte Wäschetrocknerdichtung nach einem der Ansprüche 9-13, wobei die Dichtung eine Effizienzbewertung von mindestens 90 % zur Verhinderung von Feuchtigkeitsverlust aufweist, optional wobei der Feuchtigkeitsverlust durch Industrienormen, wie zum Beispiel BS EN 61121 - 2021, gemessen wird.

**15.** Wäschetrockner, der eine geformte Wäschetrocknerdichtung nach einem der Ansprüche 9-14 umfasst.


**Revendications**

**1.** Méthode de fabrication d'un joint d'étanchéité pour sèche-linge, la méthode comprenant :

le positionnement d'une couche de feutre textile (3) dans un moule annulaire ;
l'injection d'une composition polymère comprenant du polyuréthane et les monomères constitutifs et copolymères blocs de celui-ci dans le moule annulaire ;
le durcissement de la composition polymère ; et
le démoulage du joint d'étanchéité pour obtenir un joint d'étanchéité annulaire continu d'une seule pièce (1) comprenant la composition polymère liée à la couche de feutre textile, où le matériau polymère est pourvu d'une peau formée sur ses faces externes.

**2.** Méthode selon la revendication 1, dans laquelle le moule annulaire est un moule fermé (4).

**3.** Méthode selon l'une quelconque des revendications précédentes, dans laquelle la composition polymère comprend un mélange comprenant un polyol et un isocyanate, éventuellement où le rapport entre le polyol et l'isocyanate va d'environ 100:50 à environ 100:70, ou où le polyuréthane est formé à partir d'un polyol et d'un isocyanate selon un rapport allant d'environ 100:50 à environ 100:70.

4. Méthode selon l'une quelconque des revendications précédentes, dans laquelle le feutre comprend un feutre de polyester.

5. Méthode selon l'une quelconque des revendications précédentes, dans laquelle :

i) une surface de la couche de feutre textile est flambée, préférablement éventuellement, la surface flambée étant positionnée à l'écart d'une paroi intérieure du moule annulaire ; et/ou
ii) une partie de la composition polymère sature au moins une partie de la couche de feutre textile.

6. Méthode selon l'une quelconque des revendications précédentes, dans laquelle la couche de feutre textile :

i) présente une épaisseur comprise entre environ 1 mm et environ 5 mm, éventuellement la couche de feutre textile présentant une épaisseur comprise entre environ 1,5 et environ 3 mm, et éventuellement en outre la couche textile présentant une épaisseur d'environ 2,2 mm ; et/ou
ii) présente une densité de 500-800 $g/m^2$, préférablement le feutre présentant une densité d'environ 640-680 $g/m^2$ et particulièrement préférablement le feutre présentant une densité d'environ 660 $g/m^2$.

7. Méthode selon l'une quelconque des revendications précédentes, la méthode étant mise en œuvre à une température allant d'environ 15°C à environ 30°C, préférablement à une température allant d'environ 25°C à environ 30°C.

8. Méthode selon l'une quelconque des revendications précédentes, dans laquelle le joint d'étanchéité est démoulé environ 5 à environ 15 minutes après le moulage par injection, préférablement environ 6 à environ 10 minutes après le moulage par injection.

9. Joint d'étanchéité moulé pour sèche-linge (1), obtenu par la méthode selon la revendication 1, le joint d'étanchéité comprenant un joint d'étanchéité annulaire continu d'une seule pièce comprenant une composition de polyuréthane formée d'un seul tenant avec et liée à une couche de feutre textile (3), où la composition de polyuréthane comprend une peau formée sur ses faces externes, et où, éventuellement, la peau recouvre toutes les surfaces autres que la surface de la composition de polyuréthane qui est liée à la couche de feutre textile.

10. Joint d'étanchéité moulé pour sèche-linge selon la revendication 9, dans lequel la couche de feutre textile forme une structure continue.

11. Joint d'étanchéité moulé pour sèche-linge selon l'une quelconque des revendications 9 et 10, dans lequel la couche textile a une épaisseur comprise entre environ 1 mm et environ 5 mm, préférablement où la couche textile a une épaisseur comprise entre environ 1,5 mm et environ 3 mm et particulièrement préférablement où la couche textile a une épaisseur d'environ 2,2 mm, éventuellement où le feutre comprend un feutre de polyester.

12. Joint d'étanchéité moulé pour sèche-linge selon l'une quelconque des revendications 9-11, dans lequel la couche de feutre textile :

i) présente une surface intérieure adjacente à au moins une partie de la composition de polyuréthane, éventuellement où au moins une partie de la surface intérieure est flambée, et éventuellement en outre où une partie substantielle de la surface intérieure est flambée ; et/ou
ii) présente une densité allant d'environ 500 à environ 800 $g/m^2$, préférablement le feutre ayant une densité allant d'environ 640 à environ 680 $g/m^2$ et particulièrement préférablement le feutre ayant une densité d'environ 660 $g/m^2$.

13. Joint d'étanchéité moulé pour sèche-linge selon l'une quelconque des revendications 9-12,

i) le joint d'étanchéité présentant une épaisseur allant d'environ 8,5 mm à environ 22,5 mm, préférablement une épaisseur allant d'environ 8,7 mm à environ 16,7 mm, de 10,7 mm à environ 14,7 mm ou d'environ 11,7 mm à environ 13,7 mm ; et/ou
ii) le joint d'étanchéité annulaire présentant un diamètre, D, allant d'environ 468 mm à environ 536 mm, préférablement un diamètre allant d'environ 513 mm à environ 518 mm ou d'environ 516 mm à environ 517 mm.

**14.** Joint d'étanchéité moulé pour sèche-linge selon l'une quelconque des revendications 9-13, le joint d'étanchéité présentant un coefficient d'efficacité d'au moins 90% pour empêcher la perte d'humidité, la perte d'humidité étant éventuellement mesurée selon des normes industrielles, telles que la norme BS EN 61121 - 2021.

**15.** Sèche-linge comprenant un joint d'étanchéité moulé pour sèche-linge selon l'une quelconque des revendications 9-14.

a)

11

b)

15

13

12

14

c)

16

Figure 1A-C

1

2

3

2

3

Figure 2

Figure 3A-B

Figure 4

Figure 5

Figure 6

Figure 6A

Figure 7

**EP 4 288 265 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008157037 A
- CN 103882661
- CN 201198539
- GB 2355743 A
- US 5509670 A